# EUROPÄISCHE PATENTSCHRIFT

(11) **EP 0 997 708 B1**
(45) Veröffentlichungstag und Bekanntmachung des Hinweises auf die Patenterteilung: **23.02.2005**
(21) Anmeldenummer: 99121467.7
(22) Anmeldetag: 28.10.1999
(51) Int. Cl.: G01D 11/24, G01D 18/00

(54) **Feuchtewert-Schaltgerät**
Humidity switch
Commutateur sensible à l'humiditité

(30) Priorität: 28.10.1998 DE 19849881
(43) Veröffentlichungstag der Anmeldung: 03.05.2000
(73) Patentinhaber: GFS Gesellschaft für Sonder-EDV-Anlagen GmbH, 65719 Hofheim (DE)
(72) Erfinder: Nottarp, Hermann Friedrich J., 65817 Eppstein (DE)
(74) Vertreter: Fuchs Mehler Weiss & Fritzsche

(56) Entgegenhaltungen:
- DE-A- 4 234 133
- US-A- 4 418 392
- US-A- 5 070 732
- US-A- 5 801 968
- "TRANSDUCER REDESIGN ELIMINATES COMPONENTS" MACHINE DESIGN, Bd. 63, Nr. 14, 11. Juli 1991 (1991-07-11), Seite 41 XP000241477

## Beschreibung

Die Erfindung betrifft ein Feuchtewert-Schaltgerät nach dem Oberbegriff des Patentanspruches 1. Die Erfindung betrifft ferner ein Schaltgerät-Set, welches aus einem solchen Feuchtewert-Schaltgerät und einem Programmieradapter besteht.

Bekannte Sensorelemente zur Erfassung der Feuchte von Fluidströmen, d.h. in Gasen und Flüssigkeiten, bestehen beispielsweise aus einem mikroporösen Material, in das einzelne Wassermoleküle aber nicht Moleküle mit höheren Molekulargewichten eindringen können. Der poröse Körper ist zwischen zwei Elektroden angeordnet, die mit einer Wechselspannung beaufschlagt werden. Die Anwesenheit von polaren Wassermolekülen in dem Körper ändert das Dielektrikum zwischen den beiden Elektroden, so daß die Impedanzänderung über den Elektroden eine Aussage über die Konzentration der Wassermoleküle in dem porösen Körper darstellt. Der mikroporöse Körper wird direkt mit dem zu überwachenden Fluidstrom in Kontakt gebracht. Der Konzentrationsaustausch des porösen Körpers mit dem Fluidstrom findet insbesondere bei Gasen fast verzögerungsfrei statt. Da das Meßergebnis temperaturabhängig ist, ist in der Regel zusätzlich ein Temperaturfühler im Meßkopf erforderlich, um das Meßergebnis des Feuchtesensors aufgrund einer entsprechenden Kennlinie zu berichtigen.

Feuchtesensoren der beschriebenen Art sind als solche nicht in der Lage, einen unmittelbaren Schaltzustand zu erzeugen, wie dies beispielsweise von Bimetall-Temperaturschaltern bekannt ist. Die vom Feuchtesensor erzeugten analogen Signale müssen daher aufgearbeitet werden, um aus ihnen Schaltsignale zu erhalten (siehe z.B. US-A-5 801 968). Das führt zu Gerätekonstruktionen, die mehrteilig sind, indem die Aufbereitungselektronik in einer vom Sensorelement getrennten Einheit angeordnet ist, der die analoge Meßspannung von dem am Meßort positionierten Sensorelement über Leitungswege zugeführt wird. Häufig findet die Meßsignalaufarbeitung auch in einer Datenverarbeitungsanlage statt, die ihrerseits dann Schaltspannungen zur Verfügung stellt.

Geräte zum Erfassen der absoluten Feuchte in Fluiden finden beispielsweise in Zusammenhang mit Trocknungsanlagen Anwendung. Bei verschiedenen Prozessen ist es wesentlich, den absoluten Feuchtegehalt von Fluiden zu überwachen.

Es sind aufwendige Feuchteüberwachungs- bzw. Taupunktüberwachungsgeräte bekannt, die nach dem erwähnten Prinzip arbeiten. Mit solchen Geräten läßt sich die absolute Feuchte in Gasen in einen verhältnismäßig großen Feuchteund auch Temperaturbereich überwachen, weswegen hierfür Feuchtesensoren erforderlich sind, deren Kennlinie über einen verhältnismäßig großen Bereich konstant bzw. reproduzierbar ist. Solche Geräte sind relativ aufwendig und teuer. So existieren Taupunktsensoren mit Schalttafeleinbaueinheiten, die die von einem extern angeordneten Sensorelement gelieferten Signale in Feuchtewerte umwandeln, deren Signale beispielsweise auf nachgeschaltete, einstellbare Grenzwertschalter gegeben werden. Desgleichen existieren Taupunktsensoren mit angeflanschten Auswerteeinheiten und Grenzwertschaltern. Allen diesen Geräten ist die Einstellbarkeit der Schaltsollwerte etwa mittels Tastaturen oder analog mittels Schraubendreher über Potentiometer gemeinsam. Die Schaltpunkte dieser Geräte sind unkontrolliert verstellbar, insofern nicht besondere Sicherungsmaßnahmen, wie beispielsweise verschließbare Gehäusedeckel oder dergleichen vorgesehen sind, um unerwünschten Eingriff zu verhindern. Das macht die Geräte zusätzlich bauaufwendig und teuer.

Andererseits gibt es viele Anwendungsfälle, in denen die exakte Feuchteerfassung über einen großen, reproduzierbaren Kennlinienbereich nicht erforderlich ist. Insbesondere bei kleinen Fluidtrocknungsanlagen, etwa Gasoder Öltrocknungsanlagen, kommt es im allgemeinen nur darauf an, ein oder zwei Feuchtezustände im behandelten Medium zu überwachen. Aufwendige Feuchtemeßgeräte stehen kostenmäßig in keinem Verhältnis zu den Anschaffungskosten solcher kleiner Trocknungsanlagen.

Aufgabe der Erfindung ist es, ein Feuchtewert-Schaltgerät der eingangs bezeichneten Art zu schaffen, welches kompakt und robust aufgebaut ist, einfach montierbar ist und einfach einstellbar bzw. programmierbar ist, wobei dies nur durch vorübergehend anschließbare externe Mittel möglich sein soll, so daß vor Ort an der Einbaustelle keine gewollten oder ungewollten Manipulationen der Einstellungen bzw. der Programmierung möglich sind.

Diese Aufgabe wird erfindungsgemäß im wesentlichen durch ein Feuchtewert-Schaltgerät mit den kennzeichnenden Merkmalen des Patentanspruches 1 gelöst.

Die Erfindung findet auf Feuchtewert-Schaltgeräte Anwendung, die mit elektrischer Energie gespeist werden, deren Signalverarbeitung im Inneren auf elektrischem bzw. elektronischem Wege stattfindet und deren Kommunikationselemente nach außen elektrische, geschaltete Anschlußkontakte sind.

Die Erfindung ist nicht auf die einzelnen Schaltelemente im Innern des Meßsignalgebers ausgerichtet. Die für die Signalverarbeitung erforderlichen Energieversorgungsschaltungen, Schaltungen für die Signalumsetzung, den Signalvergleich, die Signalverstärkung und ähnliche erforderliche Maßnahmen sind dem Fachmann geläufig und grundsätzlich aus herkömmlichen Geräten bekannt. Das Wesen der Erfindung liegt vielmehr darin, daß das Feuchtewert-Schaltgerät einteilig, kompakt und in sich geschlossen ausgebildet ist, um es als Ganzes an der vorgesehenen Meßstelle einbauen zu können, wobei es außer den erforderlichen Sensoren und den elektrischen Anschlußkontakten für die Spannungszuführung, die Ausgabe der geschalteten Ausgangsspannung und die Programmierung keine weiteren zusätzlichen Bedien- oder Anschlußelemente aufweist. Vorzugsweise ist es sogar derart ausgebildet, daß nur ein Minimum an elektrischen Anschlußkontakten vorgesehen ist, nämlich diejenigen für die Spannungszuführung und diejenigen für die Ausgangssignalableitung, wobei einige dieser Kontakte, insbesondere diejenigen für die Ausgangssignalableitung, intern so geschaltet sind, daß über sie auch die Programmierung vorgenommen werden kann. Damit ergeben sich für einen Feuchtesignalgeber mit zwei internen Schaltelementen zum Übertragen zweier unterschiedlicher Schaltzustände nur vier erforderliche Anschlußkontakte. Diese sind vorzugsweise in einem eingebauten, üblichen Steckverbinder enthalten. Vorzugsweise dient die geschaltete Steuer- oder Betriebsspannung gleichzeitig der Energieversorgung für die Elektronik.

Wenn im Zusammenhang dieser Beschreibung von Programmierung gesprochen wird, so betrifft dies nicht nur ausschließlich die eigentlichen im Sollwertspeicher einzugebenden Sollwerte, bei deren Übereinstimmung mit dem gemessenen Istwert die Schaltelemente angeregt werden, zum Programmieren der Schaltfunktion können auch die Eingabe einer Schalthysterese bezüglich des Feuchtigkeitsgehaltes wie auch einer Schalthysterese bezüglich der Zeit, d.h. einer Ansprechverzögerung gehören. Zum Begriff der Programmierung soll auch die externe Abfrage von Daten gehören, die im Laufe des Betriebes der in sich abgeschlossenen, kompakten Einheit in deren Speichern eventuell festgehalten werden. Hierzu können Identifikations- und Wartungsdaten gehören, wie auch der Zeitpunkt der letzten Schaltfunktionsfestlegung. Die gesamte innere Logik kann in einem kleinen Mikrocontroller untergebracht sein, der einerseits mit den Sensoren und andererseits mit den Ein- und Ausgängen der Einheit verbunden ist.

Die Programmierung des Feuchtewert-Schaltgerätes dient dazu, das Gerät für gewünschte Betriebsbedingungen einzurichten. Ist dies geschehen, ist das Gerät in sich betriebsbereit und bedarf keiner Datenkommunikation. Lediglich die Schaltausgänge sind mit einer zu schaltenden Funktionseinheit zu verbinden. Das Gerät ist von außen betrachtet nichts anderes als ein kompakter von einem Feuchtezustand abhängiger Schalter.

Das erfindungsgemäße Feuchtewert-Schaltgerät ist vorzugsweise als länglicher Körper mit einem im wesentlichen kreisförmigen Querschnitt ausgebildet, wobei sich die elektrischen Anschlußkontakte an dem den Sensoren abgewandten stirnseitigen Ende befinden. Die Verbindungselemente zum Einbau des Signalgebers in die Wand einer Rohrleitung oder eines Behälters bestehen vorzugsweise aus einem Einschraubgewinde mit entsprechender Dichtungsfläche. Als Gnmdgchäuse kann zweckmäßigerweise ein Rohrabschnitt verwendet werden, der an seinem einen Ende, aus dem auch die Sensoren herausragen, mit dem erwähnten Gewinde versehen ist, und in dessen anderes Ende der Steckverbinder eingesetzt ist. Im Inneren des Rohres kann zwischen den Sensoren und dem Steckverbinder die Leiterplatine mit dem Mikrocontroller angeordnet sein.

Die Programmierung der inneren Schaltung bzw. der Speicher des Signalgebers kann grundsätzlich über eine Verbindung der Programmieranschlüsse mit einem Computer erfolgen, der mit einer entsprechenden Programmiersoftware geladen ist. Der bidirektionelle Datenverkehr mit dem Signalgeber erfolgt zweckmäßigerweise im Wege der seriellen Datenübertragung. Vorzugsweise ist für die Programmierung jedoch ein Programmieradapter vorgesehen, der zweckmäßigerweise unmittelbar mit dem Steckverbinderanschluß des Signalgebers verbindbar ist. Denkbar wäre ein Programmieradapter, der seinerseits lediglich Eingabeelemente für die Programmierung aufweist, in bevorzugter Ausführungsform dient der Programmieradapter jedoch als Manipulierungsschutz, indem nur bei seiner Vewendung die Programmiereingänge kommunikationsbereit werden. Der Adapter dient daher als Entriegelungseinrichtung für den Programmierstatus. Ohne ihn ist eine Programmierung nicht möglich. Der Programmieradapter dieser Ausführung kann seinerseits mit einem Computer für die Datenkommunikation über ein entsprechendes Programm verbindbar sein.

Das gesamte Feuchtewert-Schaltgerät ist vorzugsweise hermetisch abgedichtet, so daß es der Schutzart IP 67 genügt. Im Falle eines Feuchtigkeitssensors mit nur zwei einprogrammierbaren Schaltpunkten, die in der Praxis oft nicht weit auseinanderliegen müssen, z.B. mit einem Schaltpunkt zum Betätigen eines Warnsignales und einem weiteren Schaltpunkt für eine Sicherheitsabschaltung der überwachten Anlage können Feuchtigkeitssensoren mit eingeschränkter Bandbreite Einsatz finden, die bei der Herstellung dieser Art von Sensoren unter Umständen als Ausschuß anfallen, weil sie für hochwertige Geräte mit großer Bandbreite nicht einsetzbar sind. Dies verbilligt weiterhin die Herstellkosten eines erfindungsgemäßen Gerätes. Es sei hervorgehoben, daß der erfindungsgemäße Feuchtesignalgeber nicht als Transmitter, beispielsweise zur Taupunktermittlung verwendbar ist, weil sein Ansprechverhalten nur auf bestimmte Schaltpunkte beschränkt ist. Er stellt vielmehr ein preiswertes Gerät mit hoher Funktionssicherheit dar, welches bei Defekten oder Nichtbenötigung ohne weiteres verworfen werden kann.

Im folgenden wird die beispielhafte Ausführungsform eines Feuchtesignalgebers anhand der beigefügten Zeichnungen noch zusätzlich erläutert. Darin stellen dar:
- Fig. 1: die Seitenansicht eines Feuchtewert-Schaltgerätes,
- Fig. 2: einen schematischen Schnitt durch das Schaltgerät nach Fig. 1, und
- Fig. 3: ein beispielhaftes Blockschaltbild für die innere Ablaufsteuerung eines Feuchtewert-Schaltgerätes mit einem Feuchtesensor und einem Temperatursensor sowie zwei Schaltausgängen.

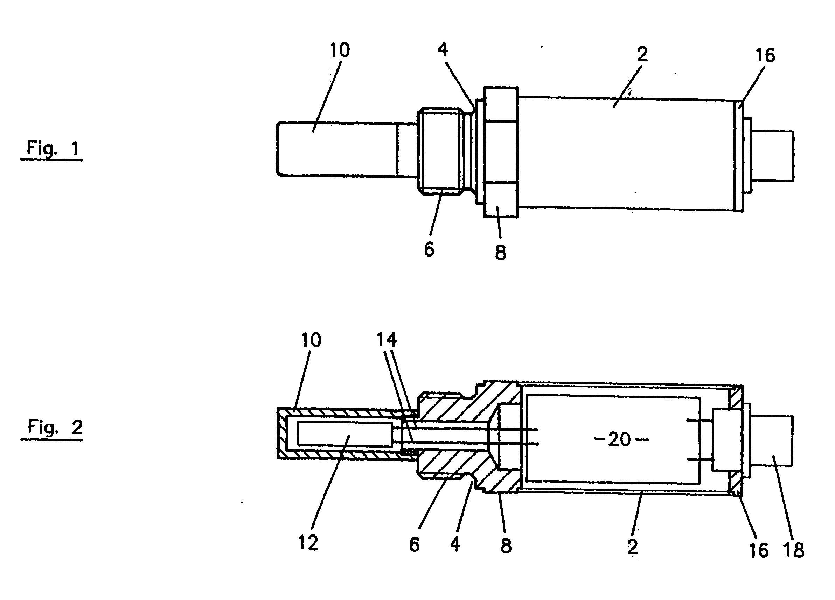

Das in den Fig. 1 und 2 in etwa in natürlicher Größe dargestellte kompakte Feuchtewert-Schaltgerät weist ein Grundgehäuse 2 auf, welches aus einem einfachen Rohrabschnitt aus Edelstahl besteht. Am einen Ende dieses Grundgehäuses 2 ist ein ebenfalls aus Edelstahl bestehendes Gewindestück 4 befestigt, welches mit einem 1/2" Außengewinde 6 und einem Sechskant 8 zum Ansetzen eines Schraubschlüssels versehen ist. An dem Gewindestück 4 ist in axialer Fortsetzung ein Sensorgehäuse 10 angebracht, in dem ein Feuchtesensor 12 angeordnet ist. Anschlußdrähte 14 des Feuchtesensors sind innerhalb des Gewindestückes 4 in eine hermetisch dichte Glasdurchführung eingeschmolzen. Das Sensorgehäuse 10 ist durchlässig für einen Fluidstrom. Das andere Ende des Grundgehäuses 2 ist mit einem Abschlußflansch 16 aus Edelstahl versehen, in den der stationäre Teil eines handelsüblichen Steckverbinders 18 eingelassen ist. Im Inneren des Grundgehäuses 2 ist eine Platine 20 angeordnet, die die erforderlichen Schaltelemente trägt und die einerseits mit den Anschlußdrähten 14 des Sensors 12 und andererseits mit Anschlüssen des Steckverbinders 18 verbunden ist.

Das gesamte Gerät hat eine Länge von nur etwa 135 mm. Es ist auf einfachste Weise montierbar, indem es mittels des Gewindestückes 4 in die Gewindebohrung einer Behälterwand oder Rohrleitung einschraubbar ist, in die das Sensorgehäuse 10 dann hineinragt. Das Gerät braucht für die Inbetriebnahme lediglich mit einem Kabel verbunden zu werden, welches das Gegenstück des Steckverbinders 18 trägt.

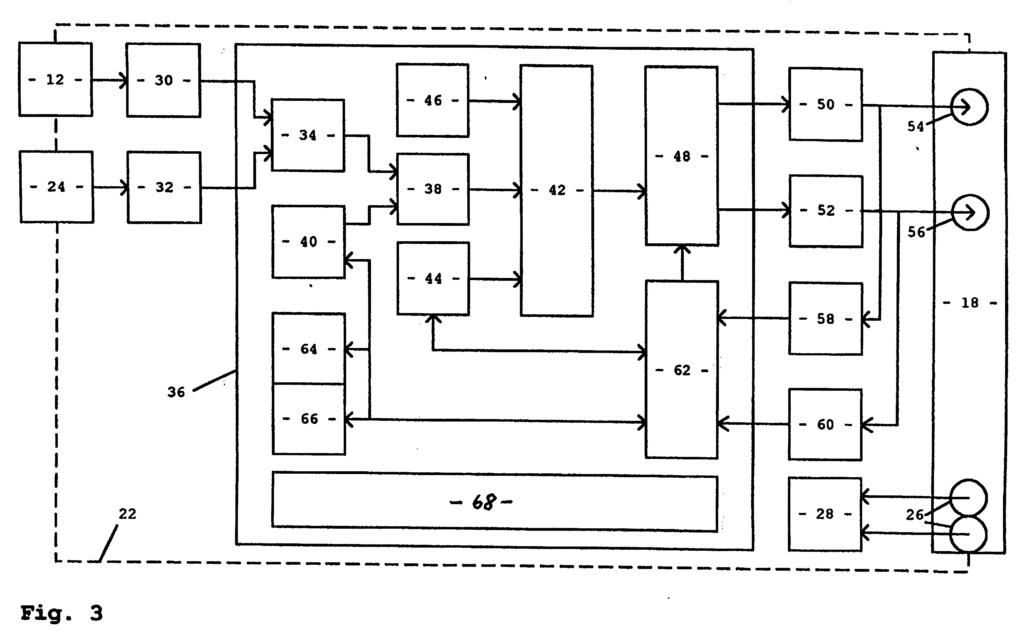

Das Blockschaltbild der Fig. 3 zeigt in schematischer Darstellung die Funktionselemente eines Gerätes, wie es in den Fig. 1 und 2 dargestellt ist, wobei diese Funktionselemente im wesentlichen auf der Platine 20 angeordnet sind. Die gestrichelte Linie 22 in Fig. 3 soll das hermetisch abgeschlossene Gehäuse des Gerätes der Fig. 1 und 2 andeuten, aus dem lediglich der Steckverbinder 18 sowie die Sensoren 12 und 24 herausragen. Der Sensor 24 ist ein zusätzlicher Temperaturfühler, der in den Fig. 1 und 2 nicht dargestellt ist. Der Steckverbinder 18 enthält u.a. zwei Kontakte 26 für die Zuführung der Versorgungsspannung, die mit einer internen Spannungsversorgungsschaltung 28 verbunden sind. Die Versorgungsspannung ist gleichzeitig die Steuer- oder Betriebsspannung, die durch das Schaltgerät geschaltet ist. Sie liegt üblicherweise bei 12-24 V. Insofern die interne Elektronik des Schaltgerätes andere Anforderungen hat, findet hierfür eine Anpassung in der Spannungsversorgungsschaltung 28 statt.

Sensorseitig enthält das Schaltgerät einen Feuchtemeßkreis 30, der mit dem Feuchtesensor 12 verbunden ist, und einen Temperaturmeßkreis 32, der mit dem Temperatursensor 24 verbunden ist. Die Ausgänge der Meßkreise 30 und 32 führen in einen Analog/Digital-Wandler 34 zur Umwandlung der analogen Meßsignale in Digitalsignale. Alle von der ausgezogenen Linie 36 umgebenen Elemente sind Teile eines Mikrocontrollers bzw. in einen Mikrocontroller einprogrammierte Funktionen. Der Ausgang des Analog/Digital-Wandlers wird einem Interpolationskreis 38 zur Interpolation zwischen in Stützstellenspeichern 40 gespeicherten Werten zugeführt. In einer Zustandsüberwachungseinheit 42 werden die durch die Interpolation 38 ermittelten Meßergebnisse mit in einem Sollwertspeicher 44 gespeicherten Feuchteschaltwerten sowie den aus dem Stützstellenspeicher 40 gespeicherten Werten für Hysterese verglichen. In der Zustandsüberwachungseinheit 42 findet ferner eine Verknüpfung mit einem Zeitwert aus einem Zeitgeber 46 statt sowie mit einem in dem Sollwertspeicher 44 gespeicherten Wert für die Schaltverzögerung. Der Ausgang der Zustandsüberwachungseinheit 42 mündet in einen Umschaltkreis 48, dessen Ausgänge die beiden Schalter 50 und 52 ansteuern, deren Ausgänge wiederum mit Anschlußkontakten 54 und 56 des Steckverbinders 18 verbunden sind.

Wie bereits weiter oben erwähnt, ist die über die Schalter 50 und 52 geschaltete Spannung eine Steuer- oder Betriebsspannung, die über die Kontakte 26 zugeführt und über (nicht dargestellte) Leitungswege unmittelbar auf die Schalter 50 und 52 geführt ist, von wo aus sie geschaltet den Ausgängen der Anschlußkontakte 54 und 56 zugeführt wird. Die an diesen Ausgängen anliegende Steuer- oder Betriebsspannung ist unmittelbar zur Betätigung von Schaltelementen wie Relais oder dergleichen vorgesehen. Eine weitere Aufarbeitung der geschalteten Ausgangszustände in einer Steuereinheit, einem Rechner oder dergleichen ist nicht erforderlich.

Über die Anschlußkontakte 54 und 56 ist im Wege der seriellen Datenübertragung andererseits auch eine bidirektionale Datenkommunikation mit dem Gerät möglich. Diese dient beispielsweise dem Auslesen von im Gerät gespeicherten Daten sowie der Programmierung der einzelnen Speicher des Gerätes. Zu diesem Zweck sind die Anschlußkontakte 54 und 56 einerseits mit je einen Eingangskreis 58 bzw. 60, und andererseits über die Schalter 50 und 52 und die Umschalteinheit 48 mit einer Kommunikations- und Protokollabwicklungseinheit 62 verbunden. Diese Funktionseinheit 62 ist ihrerseits für bidirektionalen Datenaustausch mit den Speichern 40 und 44 sowie mit einem Geräteidentifikationsspeicher 64 und einem Datumsspeicher 66 verbunden, in dem Herstell- und Wartungsdaten festgehalten werden können. Die Eingangskreise 58 und 60 dienen auch der Lastüberwachung und der Sicherung der Ein- bzw. Ausgänge des Steckverbinders 18. Der verwendete Mikrocontroller enthält ferner eine Ablaufsteuerung 68. Diese dient der Steuerung und Überwachung aller Funktionen des Meßsignalgebers.

## Patentansprüche

1. Feuchtewert-Schaltgerät mit
einem, mindestens ein Sensorelement (12) aufweisenden Meßkopf (10) zum Erfassen mindestens eines Feuchtezustandes und
mindestens einem Schaltelement (50, 52) mit Schaltausgang zum Schalten einer Steuer- oder Betriebsspannung bei Vorliegen einer Übereinstimmung des von den Sensorelementen erfaßten Feuchtezustandes mit einem gespeicherten Sollzustand,
einem programmierbaren Sollwertspeicher (44) zum Eingeben mindestens eines Sollzustandes, sowie
einem Energieversorgungsanschluß (26) zum Zuführen einer Versorgungsspannung und
Schaltungsmitteln (28, 34, 42) für die Energieversorgung, die Signalumsetzung, die Signalverstärkung und einen Signalvergleich,
bei dem zumindest der Meßkopf (10) mittels geeigneter
Verbindungselemente (6, 8) in die Begrenzungswand einer Meßumgebung einsetzbar ist,
**dadurch gekennzeichnet, daß**
das Feuchtewert-Schaltgerät
als eine in sich geschlossene kompakte Baueinheit ausgebildet ist, die das mindestens eine Schaltelement enthält, mit diesen Verbindungselementen (6, 8) zum Einsetzen in die Begrenzungswand der Meßumgebung versehen ist,
einen an einer Seite der Verbindungselemente (6, 8) angeordneten Meßkopfabschnitt (10, 12) aufweist, der bestimmt ist, im Einbauzustand in die Meßumgebung hineinzuragen, sowie
einen an der anderen Seite der Verbindungselemente (6, 8) angeordneten Anschlußabschnitt (2), der als Kommunikationselemente ausschließlich elektrische Anschlußkontakte (26, 54, 56) für die Energieversorgung (26), die Zu- und Ableitung der zu schaltenden Steuer- oder Betriebsspannung (54, 56) und die Programmierung (54, 56), insbesondere des Sollwertspeichers (44) aufweist.

2. Feuchtewert-Schaltgerät nach Anspruch 1, **dadurch gekennzeichnet, daß** die Versorgungsspannung die Steuer- oder Betriebsspannung ist.

3. Feuchtewert-Schaltgerät nach Anspruch 1 oder 2, **dadurch gekennzeichnet, daß** die Baueinheit eine längliche Gestalt mit im wesentlichen kreisförmigem Querschnitt aufweist, die Verbindungselemente ein die Baueinheit umgebendes Schraubgewinde (6) aufweisen und die Anschlußkontakte (26, 54, 56) am stirnseitigen Ende des Anschlußabschnittes (2) der Baueinheit vorgesehen sind.

4. Feuchtewert-Schaltgerät nach mindestens einem der Ansprüche 1-3, **dadurch gekennzeichnet, daß** das mindestens eine Sensorelement einen Sensor (12) zur kapazitiven Bestimmung der H₂O-Molekülkonzentration im Fluidstrom und gegebenenfalls einen Temperaturfühler (24) enthält.

5. Feuchtewert-Schaltgerät nach Anspruch 4, **dadurch gekennzeichnet, daß** es zwei Schaltelemente (50, 52) zur Übermittlung von Feuchtigkeitszuständen im Fluidstrom enthält.

6. Feuchtewert-Schaltgerät nach Anspruch 5, **dadurch gekennzeichnet, daß** es vier elektrische Anschlußkontakte (26, 54, 56) aufweist, und zwar zwei (26) für die Steuer- oder Betriebsspannung und zwei (54, 56) zur Ausgabe der geschalteten Steuer- oder Betriebsspannung aus den beiden Schaltelementen (50, 52) im Betriebszustand, wobei einige oder alle dieser Kontakte (26, 54, 56) auch für den bidirektionalen Datenverkehr bei der Programmierung geschaltet sind.

7. Feuchtewert-Schaltgerät nach Anspruch 6, **dadurch gekennzeichnet, daß** die Programmierung für bidirektionale, serielle Datenübertragung ausgebildet ist.

8. Feuchtewert-Schaltgerät nach mindestens einem der Ansprüche 4-7, **dadurch gekennzeichnet, daß** die Schaltungsmittel in Form eines Mikrocontrollers (36) mit bidirektionaler Datenkommunikation ausgebildet sind.

9. Feuchtewert-Schaltgerät nach mindestens einem der Ansprüche 6-8, **dadurch gekennzeichnet, daß** die elektrischen Anschlußkontakte (26, 54, 56) in Form eines üblichen Steckverbinders (18) ausgebildet sind.

10. Feuchtewert-Schaltgerät nach mindestens einem der Ansprüche 2-8, **dadurch gekennzeichnet, daß** die Anschlußkontakte (26, 54, 56) mit einer Kurzschlußsicherung beschaltet sind.

11. Feuchtewert-Schaltgeräte-Set, bestehend aus einem Feuchtewert-Schaltgerät nach einem der Ansprüche 1-10 und einem mit dessen Anschlußkontakten (26, 54, 56) verbindbaren Progmmmiemdapter für die Herstellung eines Programmierzustandes und die bidirektionale Datenübertragung.

12. Feuchtewert-Schaltgeräte-Set nach Anspruch 11, **dadurch gekennzeichnet, daß** der Programmieradapter seinerseits mit einem Computer-Anschluß versehen ist und eine Programmier-Software vorgesehen ist, mit deren Hilfe das Feuchtewert-Schaltgerät mittels eines Computers über den Programmieradapter programmierbar ist.

## Claims

1. Humidity switch with a measuring head (10), having at least one sensor element (12) for sensing at least one state of humidity and at least one switching element (50, 52) with a switching output for switching a control or operating voltage when the state of humidity sensed by the sensor elements coincides with a stored predefined state, a programmable setpoint memory (44) for inputting at least one predefined state and also an energy supply connection (26) for feeding in a supply voltage and switching means (28, 34, 42) for the energy supply, the signal conversion, the signal amplification and a signal comparison, in which switch at least the measuring head (10) can be fitted by means of suitable connecting elements (6, 8) into the delimiting wall of a measuring environment, **characterized in that** the humidity switch is designed as a closed compact structural unit which contains the at least one switching element, is provided with these connecting elements (6, 8) for fitting into the delimiting wall of the measuring environment, has a measuring head portion (10, 12), which is arranged on one side of the connecting elements (6, 8) and is intended to protrude into the measuring environment in the fitted state, and also a connection portion (2), which is arranged on the other side of the connecting elements (6, 8) and has as communication elements exclusively electrical connection contacts (26, 54, 56) for the energy supply (26), the feeding and discharging of the control or operating voltage (54, 56) to be switched and the programming (54, 56), in particular of the setpoint memory (44).

2. Humidity switch according to Claim 1, **characterized in that** the supply voltage is the control or operating voltage.

3. Humidity switch according to Claim 1 or 2, **characterized in that** the structural unit has an elongated shape with a substantially circular cross section, the connecting elements have a screw thread (6) surrounding the structural unit, and the connection contacts (26, 54, 56) are provided on the extreme end of the connection portion (2) of the structural unit.

4. Humidity switch according to at least one of Claims 1-3, **characterized in that** the at least one sensor element contains a sensor (12) for the capacitive determination of the H₂O molecule concentration in the fluid stream and, if appropriate, a temperature sensor (24).

5. Humidity switch according to Claim 4, **characterized in that** it contains two switching elements (50, 52) for the transmission of states of humidity in the fluid stream.

6. Humidity switch according to Claim 5, **characterized in that** it has four electrical connection contacts (26, 54, 56), to be precise two (26) for the control or operating voltage and two (54, 56) for the output of the switched control or operating voltage from the two switching elements (50, 52) in the operating state, some or all of these contacts (26, 54, 56) also being connected for the bidirectional data traffic during programming.

7. Humidity switch according to Claim 6, **characterized in that** the programming is designed for bidirectional, serial data transmission.

8. Humidity switch according to at least one of Claims 4-7, **characterized in that** the switching means are designed in the form of a microcontroller (36) with bidirectional data communication.

9. Humidity switch according to at least one of Claims 6-8, **characterized in that** the electrical connection contacts (26, 54, 56) are designed in the form of a customary plug-in connector (18).

10. Humidity switch according to at least one of Claims 2-8, **characterized in that** the connection contacts (26, 54, 56) are wired with short-circuit protection.

11. Set of humidity switches, comprising a humidity switch according to one of Claims 1-10 and a programming adapter which can be connected to the connection contacts (26, 54, 56) of the said switch for establishing a programming state and for the bidirectional data transmission.

12. Set of humidity switches according to Claim 11, **characterized in that** the programming adapter is for its part provided with a computer connection and programming software is provided, with the aid of which the humidity switch can be programmed by means of a computer via the programming adapter.

## Revendications

1. Appareil de commutation sur indice d'humidité comprenant une tête de mesure (10) qui présente au moins un élément de détection (12) pour détecter au moins un état d'humidité et au moins un élément de commutation (50, 52) muni d'une sortie tout ou rien pour commuter une tension de commande ou de service en présence d'une concordance entre l'état d'humidité détecté par les éléments de détection et un état de consigne mémorisé, une mémoire de valeurs de consigne programmable (44) pour saisir au moins un état de consigne et une prise d'alimentation en énergie (26) pour acheminer une tension d'alimentation et des moyens de connexion (28, 34, 42) pour l'alimentation en énergie, la conversion de signal, l'amplification de signal et une comparaison de signaux, avec lequel au moins la tête de mesure (10) peut être implantée au moyen d'éléments de liaison (6, 8) appropriés dans la paroi de délimitation d'un environnement de mesure, **caractérisé en ce que** l'appareil de commutation sur indice d'humidité est réalisé sous la forme d'un ensemble compact fermé en lui-même qui contient l'au moins un élément de commutation, est muni de ces éléments de liaison (6, 8) pour une implantation dans la paroi de délimitation de l'environnement de mesure, présente une portion de tête de mesure (10, 12) disposée sur un côté des éléments de liaison (6, 8), laquelle est conçue pour faire saillie dans l'environnement de mesure en situation de montage, ainsi qu'une portion de raccordement (2) disposée de l'autre côté des éléments de liaison (6, 8), laquelle, en tant qu'éléments de communication, présente exclusivement des contacts de raccordement électrique (26, 54, 56) pour l'alimentation en énergie (26), l'arrivée et le départ de la tension de commande ou de service (54, 56) à commuter et la programmation (54, 56), notamment de la mémoire de valeurs de consigne (44).

2. Appareil de commutation sur indice d'humidité selon la revendication 1, **caractérisé en ce que** la tension d'alimentation est la tension de commande ou de service.

3. Appareil de commutation sur indice d'humidité selon la revendication 1 ou 2, **caractérisé en ce que** l'ensemble présente une forme longitudinale avec une section transversale essentiellement circulaire, les éléments de liaison présentent un filet de vissage (6) qui entoure l'ensemble et les contacts de raccordement (26, 54, 56) sont prévus à l'extrémité frontale de la section de raccordement (2) de l'ensemble.

4. Appareil de commutation sur indice d'humidité selon au moins l'une des revendications 1 à 3, **caractérisé en ce qu'**au moins un élément de détection contient un capteur (12) pour la détermination capacitive de la concentration en molécules de H₂O dans le courant de fluide et, le cas échéant, une sonde de température (24).

5. Appareil de commutation sur indice d'humidité selon la revendication 4, **caractérisé en ce qu'**il contient deux éléments de commutation (50, 52) pour transmettre les états d'humidité dans le courant de fluide.

6. Appareil de commutation sur indice d'humidité selon la revendication 5, **caractérisé en ce qu'**il présente quatre contacts de raccordement électrique (26, 54, 56), à savoir deux (26) pour la tension de commande ou de service et deux (54, 56) pour délivrer la tension de commande ou de service commutée en provenance des deux éléments de commutation (50, 52) en situation de fonctionnement, l'un ou la totalité de ces contacts (26, 54, 56) étant également commuté(e) pour la transmission bidirectionnelle de données lors de la programmation.

7. Appareil de commutation sur indice d'humidité selon la revendication 6, **caractérisé en ce que** la programmation est configurée pour une transmission série bidirectionnelle de données.

8. Appareil de commutation sur indice d'humidité selon au moins l'une des revendications 4 à 7, **caractérisé en ce que** les moyens de commutation sont réalisés sous la forme d'un microcontrôleur (36) avec communication bidirectionnelle de données.

9. Appareil de commutation sur indice d'humidité selon au moins l'une des revendications 6 à 8, **caractérisé en ce que** les contacts de raccordement électrique (26, 54, 56) sont réalisés sous la forme d'un connecteur enfichable courant (18).

10. Appareil de commutation sur indice d'humidité selon au moins l'une des revendications 2 à 8, **caractérisé en ce que** les contacts de raccordement (26, 54, 56) sont connectés à un dispositif de protection contre les courts-circuits.

11. Ensemble d'appareils de commutation sur indice d'humidité, composé d'un appareil de commutation sur indice d'humidité selon l'une des revendications 1 à 10 et d'un adaptateur de programmation pouvant être relié à ses contacts de raccordement (26, 54, 56) pour l'établissement d'un état de programmation et pour la transmission bidirectionnelle de données.

12. Ensemble d'appareils de commutation sur indice d'humidité selon la revendication 11, **caractérisé en ce que** l'adaptateur de programmation est de son côté muni d'une prise informatique et qu'il est prévu un logiciel de programmation à l'aide duquel l'appareil de commutation sur indice d'humidité peut être programmé au moyen d'un ordinateur par le biais de l'adaptateur de programmation.
